# EUROPEAN PATENT SPECIFICATION

(11) **EP 0 687 216 B1**
(45) Date of publication and mention of the grant of the patent: **30.09.1998**
(21) Application number: 94909366.0
(22) Date of filing: 22.02.1994
(51) Int. Cl.: B29C 67/20, B29B 13/08, B29B 17/00, C09J 5/02, C09J 5/06, B05C 19/02, B05D 1/02

(54) **METHOD AND MEANS BY MANUFACTURE OF A PRODUCT OF EXPANDED POLYMER**
VERFAHREN UND MITTEL BEI DER HERSTELLUNG VON EXPANDIERTEN POLYMERGEGENSTÄNDEN
PROCEDE ET MOYEN DE FABRICATION DE PRODUITS EN POLYMERE EXPANSE

(30) Priority: 01.03.1993 SE 9300672
(43) Date of publication of application: 20.12.1995
(73) Proprietor: CIRRUS AB, S-573 28 Tranas (SE)
(72) Inventor: GUSTAFSSON, Per, Erik, S-541 55 Skövde (SE); HÄGGSTAM, Ulf, S-573 90 Tranas (SE)
(74) Representative: Arwidi, Bengt Dr.
(86) International application number: SE9400145
(87) International publication number: WO9420287

(56) References cited:
- WO-A-91/14144
- DE-A- 2 657 554
- DE-C- 3 844 664
- GB-A- 2 177 940
- US-A- 3 506 467
- US-A- 4 491 646
- US-A- 4 639 383
- US-A- 4 749 595
- US-A- 4 828 882
- US-A- 4 886 011
- PATENT ABSTRACTS OF JAPAN, Vol. 13, No. 425, M-873; & JP,A,01 163 006 (KAWATA K.K.), 27 June 1989 (27.06.89).
- PATENT ABSTRACTS OF JAPAN, Vol. 13, No. 252, M-836; & JP,A,01 058 512 (MATSUJI NAKAGOME), 6 March 1989 (06.03.89).
- PATENT ABSTRACTS OF JAPAN, Vol. 13, No. 22, M-786; & JP,A,63 231 908 (MATSUJI NAKAGOME), 28 Sept 1988 (28.09.88).

## Description

The present invention is for method and means by manufacture of a product of expanded polymer. This product can be either a moulded goods, i.e. get its final shape in connection with the manufacture or a semi-finished product which is given its final shape later on.

Expanded polymers comprise many different kinds of materials, such as foamed polymers, foamed rubbers and other expanded polymer. The invention, however, is primarily directed to so-called foamed polymer made from polyether.

Foamed polymers and other expanded polymers are used in many different fields, where their softness and elasticity is utilized. Examples of such fields are mattresses, pillows and different kinds of packagings and cushioning materials. The furniture industry uses different kinds of expanded polymers in different ways. The properties of the products of course depend on the choice of polymer, the crosslinking, additives and similar factors. A very essential factor is the weight per volume of the product, which is generally given as kilograms per cubic metre. This can be varied within given limits by the manufacture of the material, whereby the available technology sets a lower limit for the weight per volume unit. Freon compounds used to be used as blowing agents by the manufacture of polyether foamed polymer. The use of these compounds has now been discontinued which means that the lower limit for the attainable weight per unit volume of the manufactured polyether foam has been moved up to about 20 kg/m³.

By the manufacture and further processing of expanded polymers there falls out large or small amounts of scrap, e.g. by cutting of shaped products. Hereto the scrap has found use chopped to small pieces for filling of cushions or the like and also, as far as polyether is concerned, for manufacture of certain types of products after addition of further polyol, pressing and curing. The product is mainly insulating material, whereby, however, the weight per unit volume is considerably higher than the weight per unit volume of the starting material.

It is known from DE 38 44 664 to make board from particles of hard polyurethane foam. The size of the particles can be 10 - 20 mm. The particles are mixed with a suitable binder and the so obtained product is put into a mould, while in the mould it is exposed to a pressure and compressed to a considerable degree and an example mentions a voluable deduction of 90 percent. This process is designed to give a tuff and stiff product, the properties of which are compared to those of wooden fiber boards.

A method and a device for drying glued joints is described in WO 91/14144. The invention described therein is intended for accelerating the drying in foamed or fermented plastic products of contact surfaces joined by means of a water-based glue. Some of the energy required for the drying of the glue is obtained as microwave energy.

The present invention is for method and means by the manufacture of a product of expanded polymer, by which is obtained a weight per unit volume which is essentially lower than that of homogeneous expanded material. The starting material for the manufacture of a product according to the invention can be either a specially manufactured starting material or scrap and recovered material.

The method according to the invention uses as starting material small pieces of expanded polymer, preferably polyether foam polymer. Small drops of glue are applied to the surface of these pieces using a suitable equipment. This can be e.g. a somewhat tilted rotating net drum which contains a large number of pieces of the material. The water based glue is supplied through dies which it leaves in the form of very small droplets. When the correct amount of glue has been supplied, the drops are dried in a suitable way. It has hereby turned out that supplying the energy which is required for drying in the form of microwaves is superior to other methods as energy in this form is primarily taken up by the water in the glue drops and the drying can be completed without any noticeable increase of the temperature of the material. The dried pieces are not sticky at normal temperatures. The pieces can therefore be stored for a long time without adhering to each other even if the material is compressed during storing.

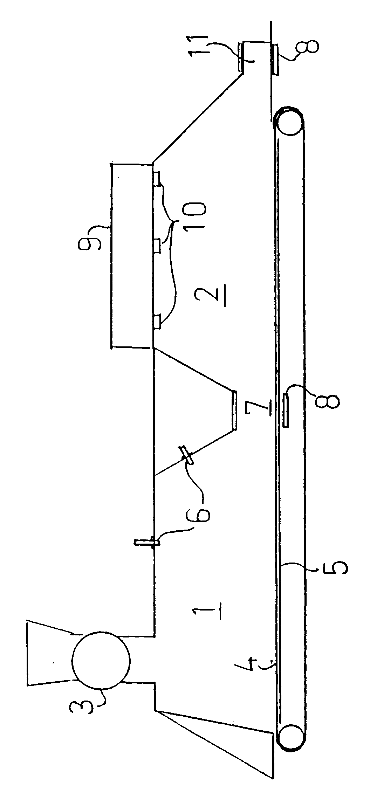

Another device which is intended for use by the process described above is shown in the enclosed figure. The pieces of expanded polymer are supplied in controlled quantities through a feeder 3 to a space 1 for the application of glue drops which are sprayed into the space from one or more dies 6. The space 1 is delimited downwards by a perforated conveyer band 4 made from PTFE or other suitable material. The conveyer band is carried by a bottom plate 5 which is perforated at least over the major part of the surface under the space 1. By means not shown in the figure a controlled flow of air is blown or suctioned through the perforations of the bottom plate and the conveyer band. Hereby a pulsating air flow is obtained which is adjusted so that the pieces of polymer remain floating in the the space 1. The air flow with the pieces of polymer then passes through a slit 7 into a second space 2. Also the conveyer band continues through the space 2, whereby it is carried by the bottom plate 5 which here has no perforations.

In the space 2 the pieces of polymer are dried by means of microwave energy which is obtained from a transmitter 9 and magnetrones 10. The dried pieces then are discarded from the space 2 together with the air flow through the opening 11. This device makes it possible to vary the applied amount of glue and the water content of the product carefully and within wide limits.

By the manufacture of a product according to the invention one starts from the pieces with glue applied to them as described above. These pieces can be either freshly manufactured or be taken from a storage container. The pieces are put into some kind of mould wherein they are pressed against each other. Thereupon the material is heated so that the glue becomes sticky and the pieces adhere to each other.

The heating is done by means of microwave energy which finds its way into and homogenously heats the whole volume of material. The distribution of heat in the different materials (glue, foamed polymer) depends on the properties of the materials and on their content of water. Alternative methods for heating, such as e.g. blowing of hot air, would mean considerably higher temperatures at the air inlets and also considerably longer processing times; in both cases depending upon that expanded polymer is an insulating material and very poorly transfers heat or allows flow of heated air. In this way one obtains a connection between the parts at all points where there are glue droplets. This means that when the product is removed from the mould and the outer pressure is removed there is only a small volume expansion.

The method according to the invention makes it possible to manufacture products which retain their elasticity and have a weight per volume unit essentially lower than that of the starting material. Starting from polyether foam polymer with a normal weight per volume of 20 - 50 kg/m³ products with a low weight per volume can be made using the method of the invention. The decrease of the weight per volume can be up to 10 kg/m³ or more. In those cases when the starting material is scrap from other production or a recovered material which has been chopped into small pieces, the shape of these pieces is generally random. The shape of the pieces may, however, be controlled if they are produced directly for use with the method of the invention. The weight per volume of the finished product can to a certain degree be controlled by the shape of the pieces. In order to obtain a low weight per volume and other properties as desired of the product it has been found that it is suitable if the pieces at least in some direction have a triangular cross section. The pieces may also have the shape of short bands, e.g. 1 - 2 cm wide, 5 -10 cm long and 3 - 7 mm thick.

Different kinds of glue may be used in connection with the invention. Primarily water based latex glues which may contain additions of acrylate or polyvinyl alcohol are used. The amount of glue which is applied can be varied within wide limits but normally the amount of glue is limited so that it forms individual discreet drops on the surface of the pieces. In certain applications larger amounts of glue are applied, e.g. in order to obtain a certain amount of closed pores in the material. In general one makes use of a glue with the property that it becomes sticky by increased temperature and then can bond together different components and when the temperature is lowered return to a non-sticky condition. For certain applications one uses glue types which can bond also to other kinds of materials. An example of such use is the manufacture of insulating board. In this case the pieces are supplied to a conveyer where they are laid out as a suitably thick layer and continuously pass through a microwave arrangement. In connection herewith a plastic film may be applied to one or both sides of the material. Such a plastic film serves as a bar for moisture in certain applications as insulating material and also as a delimiting surface for products. Instead of a plastic film one may use polyether board, paper or textile material.

## Claims

1. Method by the manufacture of a product of expanded polymer where many small pieces of expanded polymer are coated or mixed with glue and thereafter put into a shaping mould, compressed and bonded together, characterized therein, that water-based glue is applied to the surfaces of the pieces of expanded material, that pieces thereupon are put into a mould and while compressed bonded together by heating using micro-wave energy so that the weight per volume unit of the so obtained product is lower than that of the pieces.

2. Method according to claim 1, characterized therein, that the weight per volume unit of the product is controlled by the compression of the pieces.

3. Method according to claim 2, characterized therein, that the pieces are compressed so that the weight per volume of the product is about half as large as the weight per volume of the homogenous material.

4. Method according to any of the preceding claims, characterized therein, that the heating takes place in an essentially closed mould.

5. Method according to any of claims 1 - 3, characterized therein, that the heating takes place in a continuous process.

6. Method according to claim 5, characterized therein, that the heating takes place while the pieces of material are enclosed in a covering material such as plastic film, polyether board, paper, textile etc., which covers the major part of the outside of the product.

7. Method according to claim 6, characterized therein, that also the covering material is bonded to the enclosed pieces of material at the heating.

8. Method according to any of the claims 1 - 7, characterized therein, that a water based glue in the form of small droplets is applied to the pieces and immediately thereupon dried using microwave energy, so that they are non-sticky at ambient temperature.

9. Device for use by the manufacture of a product of expanded polymer for simultaneous application of glue to many small pieces of expanded polymer, characterized therein, that it comprises a feeder (3) to supply controlled amounts of small pieces to a volume (1) for the application of water-based glue droplets, a second space (2) having devices (9, 10) to dry the water-based glue using micro-wave energy, a perforated conveyer band (4), which extends through both spaces (1, 2) and is carried by a bottom plate (5), which is perforated at least during the major part of the surface under the first space (1), so that a pulsating air flow is obtainable through the conveyer band (4) and the bottom plate (5), which keeps the pieces of polymer floating in the first space (1).

## Patentansprüche

1. Verfahren zur Herstellung eines Produktes aus expandiertem Polymer, wobei viele kleine, expandierte Polymerstücke mit Klebstoff beschichtet oder vermischt sind und danach in eine gestaltgebende Form eingebracht, verdichtet und miteinander verbunden werden, dadurch gekennzeichnet, daß auf Wasser basierender Klebstoff auf den Oberflächen der expandierten Materialstücke angebracht wird, daß die Stücke danach in eine Form eingebracht und unter Zusammendrücken durch Erhitzung unter Anwendung von Mikrowellenenergie miteinander verbunden werden, so daß das Gewicht pro Volumeneinheit des so erhaltenen Produktes geringer als das der Teile ist.

2. Verfahren nach Anspruch 1, dadurch gekennzeichnet, daß das Gewicht pro Volumeneinheit des Produktes durch die Verdichtung der Stücke kontrolliert wird.

3. Verfahren nach Anspruch 2, dadurch gekennzeichnet, daß die Stücke so verdichtet werden, daß das Gewicht pro Volumeneinheit des Produktes etwa die Hälfte des Gewichtes pro Volumeneinheit des homogenen Materials ausmacht.

4. Verfahren nach einem der vorhergehenden Ansprüche, dadurch gekennzeichnet, daß die Erhitzung in einer im wesentlichen geschlossenen Form stattfindet.

5. Verfahren nach einem der Ansprüche 1 bis 3, dadurch gekennzeichnet, daß die Erhitzung während eines kontinuierlichen Prozesses stattfindet.

6. Verfahren nach Anspruch 5, dadurch gekennzeichnet, daß die Erhitzung stattfindet, während die Materialstücke von einem bedeckenden Material, wie z.B. Kunststoffilm, Polyäther-Pappe, Papier, Stoff usw., das den überwiegenden Teil der Oberfläche des Produktes abdeckt, umgeben sind.

7. Verfahren nach Anspruch 6, dadurch gekennzeichnet, daß auch das bedeckende Material während der Erhitzung mit den umgebenden Stücken verbunden wird.

8. Verfahren nach einem der Ansprüche 1 bis 7, dadurch gekennzeichnet, daß ein auf Wasser basierender Klebstoff in Form von kleinen Tröpfchen auf den Stücken angebracht und sofort danach mittels Mikrowellenenergie getrocknet wird, so daß die Tröpfchen in der Umgebungstemperatur nicht klebrig sind.

9. Vorrichtung zur Herstellung eines Produktes aus expandiertem Polymer zur gleichzeitigen Auftragung von Klebstoff auf viele kleine, expandierte Polymerstücke, dadurch gekennzeichnet, daß sie eine Eingabevorrichtung (3) zur Einführung kontrollierter Mengen kleiner Stücke in ein Volumen (1) zur Auftragung von auf Wasser basierenden Klebstofftröpfchen, einen zweiten Raum (2) mit Vorrichtungen (9, 10) zum Trocknen des auf Wasser basierenden Klebstoffes mittels Mikrowellenenergie, ein perforiertes Transportband (4), das sich über beide Räume (1, 2) erstreckt und von einer Bodenplatte (5) getragen wird, die mindestens im überwiegenden Teil der Fläche unterhalb des ersten Raumes (1) perforiert ist, so daß ein pulsierender Luftstrom durch das Transportband (4) und die Boden platte (5) erzeugt werden kann, welcher die Polymerstücke im ersten Raum (1) schwebend hält, umfaßt.

## Revendications

1. Procédé pour la fabrication d'un produit en polymère expansé, dans lequel de nombreuses petites pièces de polymère expansé sont revêtues ou mélangées avec de la colle puis sont placées dans un moule de conformation, comprimées et liées ensemble, caractérisé en ce que de la colle à base d'eau est appliquée sur la surface des pièces de matière expansée, en ce que les pièces sont ensuite placées dans un moule et, pendant qu'elles sont comprimées, liées ensemble par chauffage en utilisant une énergie à micro-ondes, de telle manière que le poids du produit ainsi obtenu par unité de volume est inférieur à celui des pièces.

2. Procédé selon la revendication 1, caractérisé en ce que le poids du produit par unité de volume est commandé par la compression des pièces.

3. Procédé selon la revendication 2, caractérisé en ce que les pièces sont comprimées de telle manière que le poids du produit par unité de volume est d'environ la moitié du poids de la matière homogène par unité de volume.

4. Procédé selon l'une quelconque des revendications précédentes, caractérisé en ce que le chauffage est effectué dans un moule essentiellement fermé.

5. Procédé selon l'une quelconque des revendications 1 à 3, caractérisé en ce que le chauffage est effectué dans un processus continu.

6. Procédé selon la revendication 5, caractérisé en ce que le chauffage est effectué pendant que les pièces de matière sont enfermées dans une matière de revêtement, telle qu'une pellicule en matière plastique, un panneau en polyéther, du papier, du textile, etc., qui recouvre la plus grande partie de l'extérieur du produit.

7. Procédé selon la revendication 6, caractérisé en ce que la matière de revêtement est également liée aux pièces de matière enfermées lors du chauffage.

8. Procédé selon l'une quelconque des revendications 1 à 7, caractérisé en ce qu'une colle à base d'eau, sous la forme de petites gouttelettes, est appliquée aux pièces, qui sont immédiatement séchées ensuite en utilisant une énergie à micro-ondes, de sorte qu'elles sont non collantes à la température ambiante.

9. Dispositif pour l'utilisation lors de la fabrication d'un produit de polymère expansé, pour l'application simultanée de colle à de nombreuses petites pièces de polymère expansé, caractérisé en ce qu'il comporte un dispositif d'alimentation (3) pour délivrer des quantités contrôlées de peites pièces à un volume (1) pour l'application de gouttelettes de colle à base d'eau, un second espace (2) comportant des dispositifs (9, 10) pour sécher la colle à base d'eau en utilisant une énergie à micro-ondes, une bande transporteuse perforée (4), qui s'étend à travers les deux espaces (1, 2) et est portée par une plaque de fond (5), laquelle est perforée au moins sur la plus grande partie de la surface située sous le premier espace (1), de sorte qu'on peut obtenir un écoulement d'air pulsatoire à travers la bande transporteuse (4) et la plaque de fond (5), ce qui maintient les pièces de polymère flottantes dans le premier espace (1).
